**Europäisches Patentamt**

**European Patent Office**

**Office européen des brevets**

(19)

(11) Veröffentlichungsnummer: **0 143 790**

**· B1**

(12)  **EUROPÄISCHE PATENTSCHRIFT**

(45) Veröffentlichungstag der Patentschrift :
30.12.86

(51) Int. Cl.⁴ : **B 29 C 39/36**, B 29 C 41/42,
B 29 C 45/17, B 29 C 45/40

(21) Anmeldenummer : 84900978.2

(22) Anmeldetag : 02.03.84

(86) Internationale Anmeldenummer :
PCT/EP 84/00058

(87) Internationale Veröffentlichungsnummer :
WO/8403469 (13.09.84 Gazette 84/22)

(54) **AUSWERFERSYSTEM FÜR TEILBARE FORMEN.**

(30) Priorität : 03.03.83 DE 3307590

(43) Veröffentlichungstag der Anmeldung :
12.06.85 Patentblatt 85/24

(45) Bekanntmachung des Hinweises auf die Patenterteilung : 30.12.86 Patentblatt 86/52

(84) Benannte Vertragsstaaten :
AT CH DE FR GB LI NL SE

(56) Entgegenhaltungen :
DE-A- 2 141 373
FR-A- 2 225 271
US-A- 3 290 724

(73) Patentinhaber : TEUBERT, Joachim
Waldshuterstrasse 15
D-7712 Blumberg (DE)

(72) Erfinder : TEUBERT, Joachim
Waldshuterstrasse 15
D-7712 Blumberg (DE)

(74) Vertreter : Bauer, Robert, Dipl.-Ing. et al
Boeters, Bauer & Partner Patentanwälte Thomas-
Wimmer-Ring 14
D-8000 München 22 (DE)

## Beschreibung

Die Erfindung betrifft ein Auswerfersystem für teilbare Formen gemäß Gattungsbegriff des Anspruchs 1.

Beispielsweise in der Schaumstoff-Preßformtechnik ist es bekannt, die betreffenden Formen mit stößelgeführten mechanischen Auswerfern zu versehen, die beim oder nach dem Öffnen der Form in Tätigkeit treten, um die geformten Gegenstände von dem betreffenden Formteil zu lösen und auszuwerfen. Solche Auswerfer können entweder, vermittels einer Anschlagplatte oder dergl., von der Öffnungsbewegung der Form her oder aber seitens eines eigenen Auswerferzylinders betätigbar sein. Im letzteren Fall kann für jeden Auswerfer ein eigener Auswerferzylinder vorgesehen sein, oder es kann — wovon häufig bei Formen mit Heiz- und/oder Kühlkammer Gebrauch gemacht wird — ein gemeinsamer, an der Außenwand der Kammer angeordneter Auswerferzylinder die einzelnen Auswerfer über eine im Inneren der Heiz- und/oder Kühlkammer bewegliche Übertragungsplatte betätigen. Während die erstere dieser letztgenannten Möglichkeiten hinsichtlich der Synchronbewegung der einzelnen Auswerfer Schwierigkeiten bereitet und dazu noch bauaufwendig ist sowie eine Vielzahl i. a. paarweise miteinander fluchtender Hindurchführungen erfordert, setzt die zweite eine entsprechend tiefe und damit voluminöse Heiz- bzw. Kühlkammer voraus, was energiewirtschaftlich unökonomisch ist. Die Ableitung der Auswerferbewegung von der Bewegung des betreffenden Formteils bringt eine entsprechende Vielzahl offen nach außen über die Form hervortretender Stößelstangen mit sich, die zur Vermeidung einer Unfallgefahr abgeschirmt werden müssen, ganz abgesehen davon, daß auch hier wieder entsprechend viele paarweise miteinander fluchtende Hindurchführungen erforderlich sind, sofern nicht wiederum von einer innenliegenden Übertragungsplatte Gebrauch gemacht wird.

Aus der US-PS-3 290 724 — wovon im Gattungsbegriff ausgegangen wird — ist es zwar bereits bekannt, eine Mehrzahl mechanischer Auswerfer seitens eines gemeinsamen, außerhalb der Form angeordneten Auswerferzylinders über flexible Stößelstangen in Form von in Rohren geführten, dicht gewickelten Wendelfedern zu betätigen, doch handelt es sich hier nicht um eine abgedichtete Hindurchführungen erfordernde Form, wie dies beispielsweise unter Verwendung von Heiz- und/oder Kühlkammern der Fall wäre. Für eine entsprechende Abdichtung mittels O-Ringen oder Stopfbüchsen sind Wendelfedern nicht geeignet, während die Abdichtung der umgebenden Rohre zumindest dort infolge Wärmespannungen auf Schwierigkeiten stößt, wo die Rohre hintereinanderliegende Hindurchführungen aufweisen, wie etwa an Forminnen- und -außenwand.

Hier soll die Erfindung Abhilfe schaffen. Ihr liegt demzufolge die Aufgabe zugrunde, bei einem Auswerfersystem nach Gattungsbegriff auf einfache Weise eine Abdichtung der Form nach außen zu erreichen, unabhängig davon, welche Stellung die Auswerfer gerade einnehmen.

Die vorgenannte Aufgabe ist durch die kennzeichnenden Merkmale des Anspruchs 1 gelöst.

Die aus Kunststoff hergestellten und dementsprechend glattwandigen Stangen stellen einer Abdichtung mittels O-Ring oder Stopfbüchse keine Schwierigkeiten entgegen, wobei der i. a. niedrige Reibungsbeiwert (« Selbstschmierungseigenschaft ») geeigneter Kunststoffe sehr gelegen kommt. Dazu noch verbessert der niedrige Reibungsbeiwert die Leichtgängigkeit der Stangen in den Rohren und erlaubt es, Stangen wie Rohren eine stärkere Biegung zu geben. Dies ist insbesondere dann der Fall, wenn — gemäß Anspruch 2 — auch die Rohre aus zähelastischem Kunststoff hergestellt werden.

In diesem Sinne geben die Unteransprüche vorteilhafte Ausgestaltungsmöglichkeiten der Erfindung an. Von besonderem Vorteil kann es sein, bei in Füllinjektoren integrierten Auswerfern, wie sie beispielsweise aus der DE-OS-2 141 373 und der FR-OS-2 225 271 bekannt sind, die betreffenden Auswerfer auf die erfindungsgemäße Weise seitens eines gemeinsam außenliegenden Zylinders über glattwandige flexible Stangen zu betätigen. Auf diese Weise läßt sich sicherstellen, daß bei all diesen Injektoren die Auswerfer, die zugleich auch die Verschlußglieder bilden, synchron tätig werden.

Nachfolgend werden zwei Ausführungsbeispiele der Erfindung anhand der Figuren genauer beschrieben. Dabei zeigt

Figur 1 ein Schema eines erfindungsgemäßen Auswerfersystems, bei dem die Form und deren Auswerferzylinder geschnitten erscheinen,

Figur 2 ein Detail der Form aus Fig. 1 mit den betreffenden Hindurchführungen,

Figur 3 ein Detail von der Einspannung der flexiblen Stangen am Auswerferzylinder nach Fig. 1 und

Figuren 4-6 jeweils ein Schema eines erfindungsgemäßen Auswerfersystems, bei dem die einzelnen Auswerfer in Füllinjektoren integriert sind, in verschiedenen Phasen.

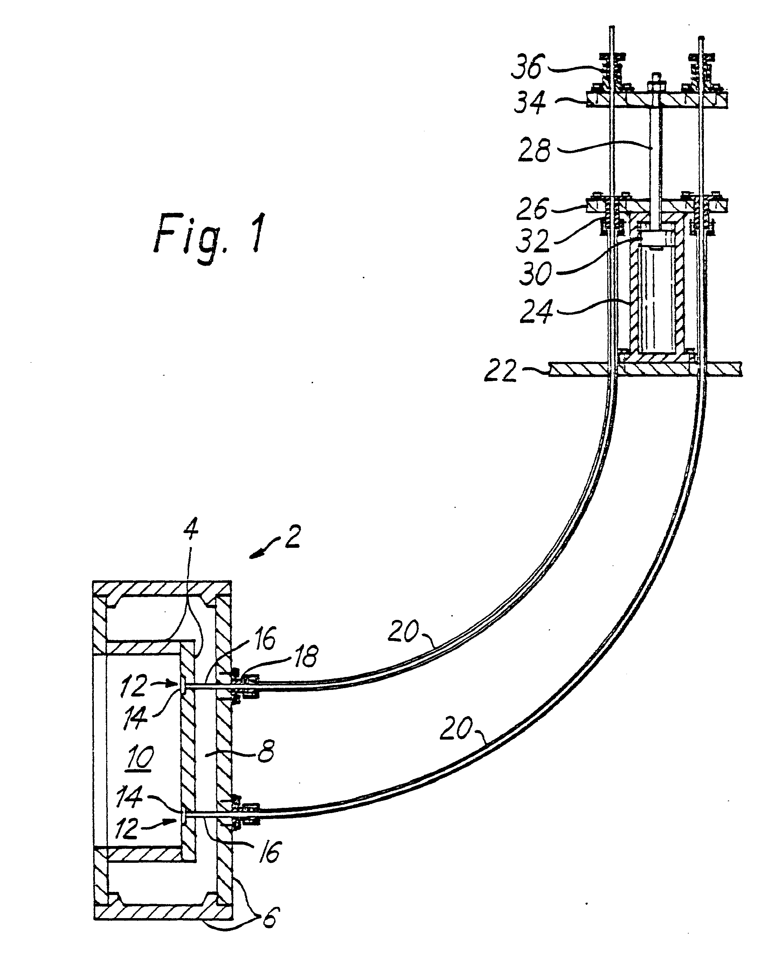

Das in Fig. 1 dargestellte Formteil 2, ein solches einer Schaumstoff-Preßform, weist zwischen den beiden Formwänden 4 und 6 eine übliche Heiz- und Kühlkammer (« Dampfkammer ») 8 auf. Über die Kammer 8 kann in üblicher Weise durch Schlitzdüsen oder dergl. Schäumdampf in den Formhohlraum 10 eingespeist und nach dem Schäumvorgang die Formwand 4 mit Kühlwasser beaufschlagt werden, sofern die Stabilisierung des Schaumes nicht auf eine andere bekannte Weise herbeigeführt wird.

Das Formteil 2 ist im gezeigten Beispiel mit zwei stößelgeführten mechanischen Auswerfern 12 ausgerüstet, deren tellerförmige Köpfe 14 normalerweise zum Formhohlraum 10 bündig in entsprechenden Aussparungen der Formwand 4 liegen, jedoch zum Zweck des Auswerfens des geformten Gegenstandes nach dem Öffnen der Form in der Figur nach links in den Formhohlraum 10 hervortreten. Nach rückwärts schließt sich an einen jeden der Köpfe 14 eine flexible Stange 16 an, die in diesem Fall den Stößel bildet und durch entsprechende Bohrungen der Formwand 4 und 6 nach außen tritt. Dabei läuft jede Stange 16 an der Außenseite der Formwand 6 durch eine aufgeschraubte Führungs- und Dichtungsbüchse 18 hindurch, in die zugleich ein Ende eines die Stange außerhalb des Formteils 2 umgebenden flexiblen Rohres 20 eingespannt ist.

Die Rohre 20 und Stangen 16 treten an einer geeigneten Stelle außerhalb der Form durch eine ortsfeste Platte 22 etwa des Maschinengestells hindurch, auf der ein gemeinsamer, doppeltwirkender Auswerferzylinder 24 befestigt ist. Am entgegengesetzten Ende des Zylinders 24 ist eine Verankerungsplatte 26 angebracht, durch welche die Kolbenstange 28 des in dem Zylinder befindlichen Kolbens 30 hindurchtritt. In der Platte 26 sind vermittels aufgeschraubter Büchsen 32 die anderen Enden der flexiblen Rohre 20 festgelegt. Die Kolbenstange 28 trägt an ihrem äußeren Ende eine Platte 34, an der mittels aufgeschraubter Klemmbüchsen 36 die freien Enden der flexiblen Stangen 16 in der Weise passend festgelegt sind, daß die Köpfe 14 der Auswerfer 12 bei ausgefahrener Kolbenstange 28 gerade vollkommen in den betreffenden Aussparungen verschwinden.

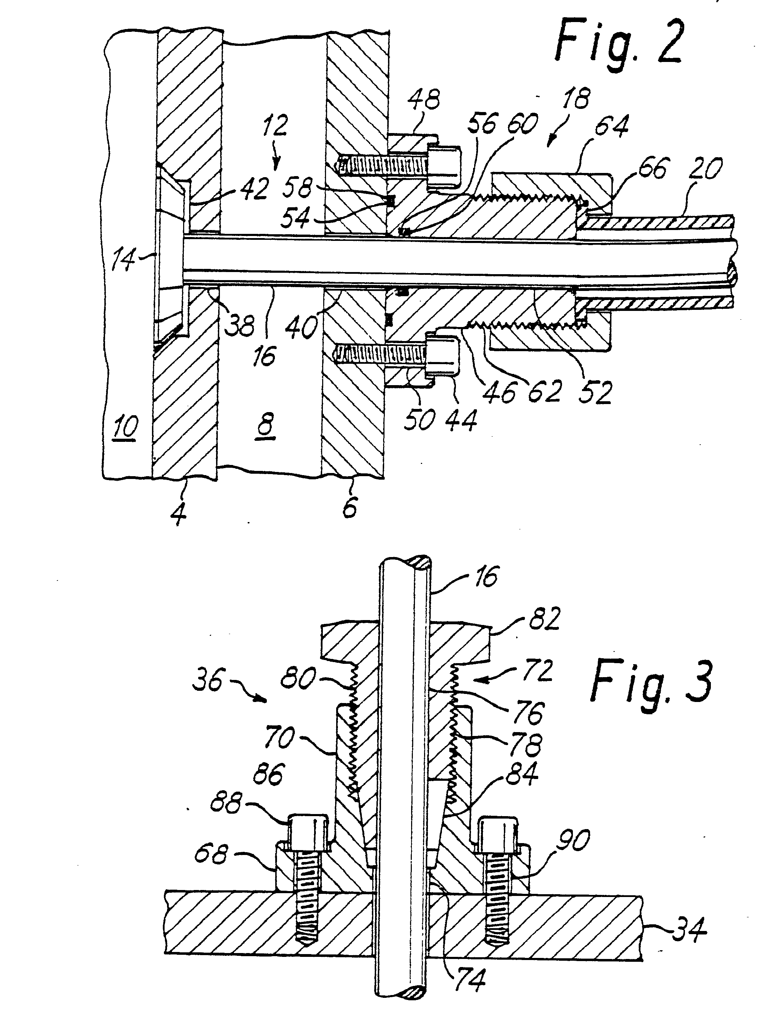

Fig. 2 zeigt ein Detail aus Fig. 1, aus dem die Führung und Abdichtung eines der Auswerfer 12 genauer hervorgehen. Wie ersichtlich tritt die flexible Stange 16 durch die betreffenden Bohrungen 38 und 40 in den Formwänden 4 und 6 mit einem geringen Soiel hindurch. Die Abdichtung der Kammer 8 zum Formhohlraum 10 hin erfolgt in diesem Fall durch den Auswerferkopf 14, der zu diesem Zweck rückseitig angefast ist und mit seinem Konus passend in einem entsprechenden Konus der ihn aufnehmenden Aussparung 42 zu liegen kommt. Die Abdichtung nach außen wird zugleich mit der Führung der flexiblen Stange 16 durch die Büchse 18 bewirkt, die mittels Schrauben 44 außen an der Formwand 6 befestigt ist. Diese Führungs- und Dichtungsbüches 18 weist zu diesem Zweck einen im wesentlichen zylindrischen Körper 46 auf, an dem sich ein Flansch 48 mit Schraubenlöchern 50 und in dem sich eine zu der Stange 16 passende zylindrische Bohrung 52 befinden. An der Stirnseite des Körpers 46 auf der Seite des Flansches 48 wie auch an der Bohrung 52 befindet sich je eine Ringnut 54 bzw. 56 zur Aufnahme eines O-Ringes oder dergl. 58 bzw. 60. An seinem freien Ende ist der Körper 46 mit einem Außengewinde 62 versehen, auf das eine Überwurfmutter 64 aufgeschraubt ist. Mit dieser ist das Ende des flexiblen Rohres 20 festgelegt, das zu diesem Zweck einen Bund 66 aufweist. Alternativ hierzu könnte das Rohrende beispielsweise auch durch einen Klemmschneidring gehalten sein. Das Rohr 20, das ebenso wie die Stange 16 aus einem zähelastischen Kunststoff genügender Temperaturfestigkeit und mit niedrigem Reibungsbeiwert besteht, umgibt die Stange mit einem gewissen Spiel. Der Zwischenraum kann im Bedarfsfall mit einem geeigneten Schmiermittel ausgefüllt sein.

Selbst wenn die Bohrungen 38 und 40, falls dies erwünscht sein sollte, die flexiblen Stangen 16 satt umschließen, brauchen diese Bohrungen im Gegensatz zu herkömmlichen Stößelführungen mechanischer Auswerfer nicht exakt miteinander zu fluchten, da kleine Versetzungen durch die Flexibilität der Stangen 16 ausgeglichen werden.

Die Büchsen 32 können in der gleichen Weise wie die Büchsen 18 ausgebildet sein, weshalb sich eine genauere Beschreibung hier erübrigt. Dabei kann auf eine besondere Abdichtung allerdings gewöhnlich verzichtet werden. Ein Unterschied besteht im Beispiel der Fig. 1 noch insoweit, als die Büchsen 32 durch die betreffende Platte 26 hindurchgeführt sind.

Eine geeignete Ausführung der Klemmbüchsen 36 für die Stangen 16 ist in Fig. 3 dargestellt. Eine solche Klemmbüchse weist einen in einem Flanch 68 endenden zylindrischen Körper 70 sowie eine darin eingeschraubte Klemmschraube 72 mit zentralen Bohrungen 74 bzw. 76 auf, durch welche die flexible Stange 16 hindurchgeführt ist. Genauer gesagt enthält der zylindrische Körper 70 in seinem nach außen weisenden Abschnitt ein Innengewinde 78, welches einen entsprechenden Gewindeabschnitt 80 der Klemmschraube 70 aufnimmt. An ihrem Außenende weist die Klemmschraube 72 einen Sechskantkopf 82 auf. Nach unten schließt sich an das Gewinde 78 innerhalb des Körpers 70 eine damit koaxiale konische Aussparung 84 an, und ebenso bei der Klemmschraube 72 an deren Gewindeabschnitt 80 ein zu der Aussparung 84 passender konischer Fortsatz 86, der auf einer Seite in Axialrichtung geschlitzt ist. Auf diese Weise verengt sich die Bohrung 76 innerhalb des Fortsatzes 86 in dem Maße, wie durch gewaltsames Einschrauben der Klemmschraube 72 der Fortsatz 86 weiter in die Aussparung 84 hineingetrieben wird. So ist die durch die Bohrung 76 hindurchlaufende Stange 16 an beliebiger Stelle festklemmbar. Der Flansch 68 ist auf der Platte 34 mittels Schrauben 88 befestigt, die durch entsprechende Schraubenlöcher 90 hindurchtreten.

Anstelle der vorbeschriebenen Klemmbüchsen 36 könnten freilich u. U. auch einfache Klemmschrauben an der Platte 34 vorgesehen sein. Zur Schonung der Stangen 16 könnten diese über geschlitzte Büchsen oder dergl. auf die Stangen einwirken, wie dies bei Klemmverbindungen geläufig ist.

Indem der Kolben 30 des Auswerferzylinders 24 mit jedem einzelnen Auswerfer 12 fest verbunden und der Auswerferzylinder doppeltwirkend ist, erübrigen sich Rückholfedern für die Auswerfer. Auf diese Weise entfällt auch die Gefahr, daß einzelne Auswerfer nicht vollständig in die betreffende Aussparung 42 zurückkehren, wie andererseits die Gewähr gegeben ist, daß sämtliche Auswerfer synchron tätig werden.

Falls jedoch erwünscht, kann der Auswerferzylinder 24 auch einfachwirkend sein und gegen die Kraft etwa einer die Kolbenstange 28 umgebenden, gemeinsamen Rückholfeder arbeiten.

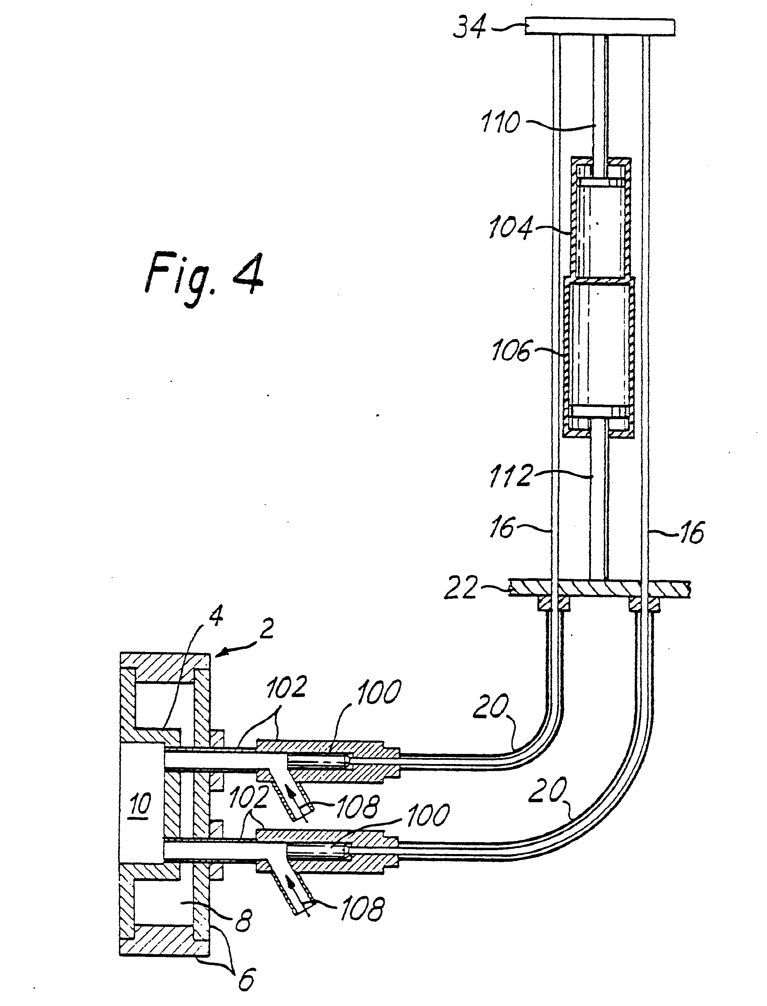

Die Figuren 4 bis 6 zeigen (in einer Darstellung ähnlich derjenigen von Fig. 1, jedoch etwas stärker schematisiert) ein erfindungsgemäßes Auswerfersystem, bei dem die betreffenden Auswerfer 100 — deren Verschlußglieder bildend — in Füllinjektoren integriert sind. Soweit die dargestellten Teile denjenigen aus Fig. 1 entsprechen, sind sie mit den gleichen Bezugszeichen bezeichnet. Der betreffende einzige Auswerferzylinder 24 ist nun aber in zwei unabhängig voneinander beaufschlagbare, wirkungsmäßig hintereinandergeschaltete Zylinder 104 und 106 unterteilt, um die Auswerfer in drei definierte Positionen bringen zu können :

Fig. 4 zeigt die in diesem Falle kolbenartigen Auswerfer 100 in einer ersten Position, in der sie, wie durch die Pfeile 108 symbolisiert, den Zutritt des Rohmaterials in den Formhohlraum 10 freigeben. Dazu sind die Kolbenstangen 110 und 112 beider Zylinder, 104 und 106, augefahren.

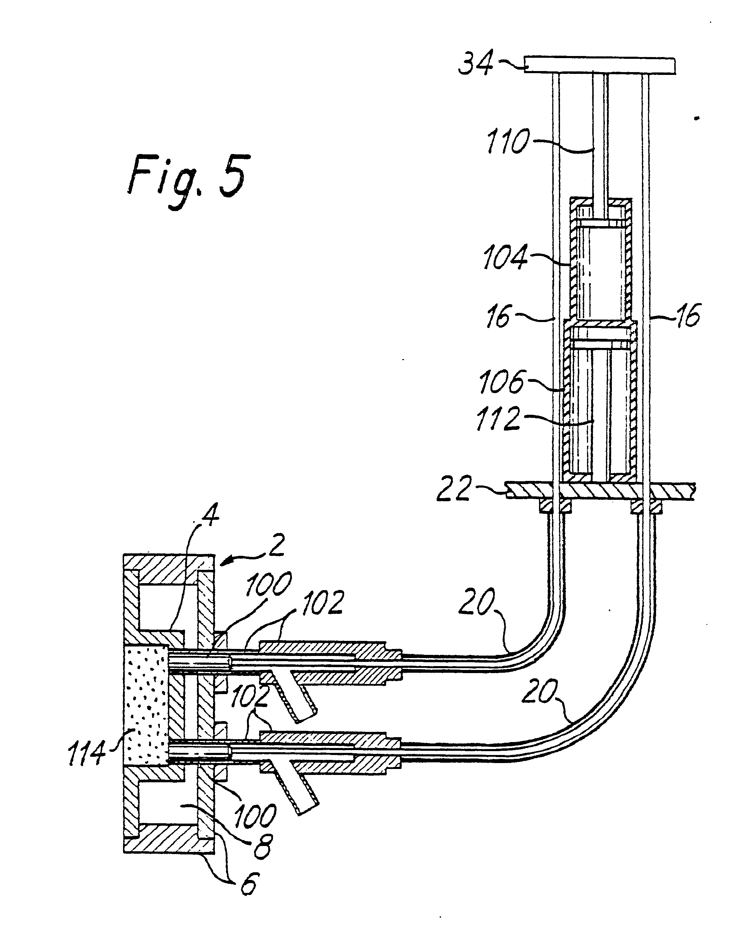

In einer zweiten Position, gemäß Fig. 5, bei der nur die Kolbenstange 110 des Zylinders 104 ausgefahren ist, versperren die Auswerfer 100 den Zutritt zu bzw. Austritt aus der Form durch die Injektoren 102 hindurch : Die Injektoren sind geschlossen. In diesem Stadium finden der sog. Schäumprozeß und die anschließende Schaumstabilisierung in dem so gebildeten Schaumstoffkörper 114 statt.

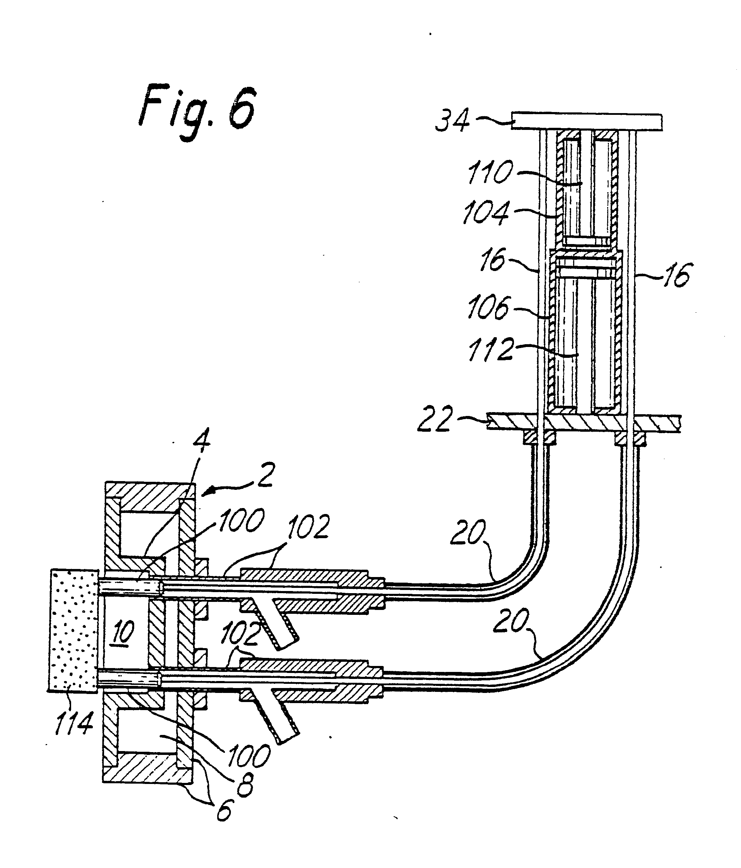

Fig. 6 schließlich zeigt die Auswerfer 100 in ihrer Auswurfposition, in der sie den fertigen Schaumstoffkörper 114 aus dem Formhohlraum 10 ausgestoßen haben. Dabei sind nun beide Kolbenstangen, 110 und 112, eingezogen. Die Injektoren 102 sind unterdessen weiterhin geschlossen.

**Patentansprüche**

1. Auswerfersystem für teilbare Formen, insbesondere Schaumstoff-Preßformen, mit einer Mehrzahl mechanischer Auswerfer (12 ; 100), die über in Rohren (20) geführte flexible Stangen (16) durch einen gemeinsamen, außerhalb der Form angeordneten Auswerferzylinder (24) betätigbar sind, dadurch gekennzeichnet, daß die Stangen (16), aus einem zähelastischen Kunststoff bestehend, glattwandig ausgeführt und an ihrem Austritt aus der Form abgedichtet sind.

2. Auswerfersystem nach Anspruch 1, dadurch gekennzeichnet, daß auch die Rohre (20), vorzugsweise aus einem zähelastischen Kunststoff bestehend, flexibel sind.

3. Auswerfersystem nach Anspruch 1 oder 2, dadurch gekennzeichnet, daß die Rohre (20) die Stangen (16) mit Spiel umschließen.

4. Auswerfersystem nach einem der vorhergehenden Ansprüche, dadurch gekennzeichnet, daß die Stangen (16) durch eine Heiz- und/oder Kühlkammer (8) der Form hindurch nach außen geführt sind.

5. Auswerfersystem nach Anspruch 4, dadurch gekennzeichnet, daß die Rohre (20) lediglich an die Außenwand (6) der Heiz- und/oder Kühlkammer (8) heranreichen.

6. Auswerfersystem nach Anspruch 5, dadurch gekennzeichnet, daß die Stangen (16) lediglich an ihrem Hindurchtritt durch die Außenwand (6) der Heiz- und/oder Kühlkammer (8) geführt und abgedichtet sind.

7. Auswerfersystem nach einem der vorhergehenden Ansprüche, dadurch gekennzeichnet, daß die Länge der Stangen (16) im Verhältnis zur Länge der Rohre (20) samt daran anschließenden Führungsmitteln (18, 32) individuell einstellbar ist.

8. Auswerfersystem nach einem der vorhergehenden Ansprüche, dadurch gekennzeichnet, daß der Kolben (30) des Auswerferzylinders (24 ; 104, 106) mit den Auswerfern (12) fest verbunden und der Auswerferzylinder doppeltwirkend ist.

9. Auswerfersystem nach einem der vorhergehenden Ansprüche, dadurch gekennzeichnet, daß die Auswerfer (12) rückseitig angefaste und in einer entsprechenden Aussparung (42) passend Aufnahme findende tellerförmige Köpfe (14) aufweisen.

10. Auswerfersystem nach einem der Ansprüche 1-8, dadurch gekennzeichnet, daß zumindest einzelne der Auswerfer (100) in Füllinjektoren (102) der betreffenden Form integriert sind.

11. Auswerfersystem nach Anspruch 10, dadurch gekennzeichnet, daß die betreffenden Auswerfer (100) zugleich das Verschlußglied der betreffenden Füllinjektoren (102) bilden und dazu in drei definierte Positionen bringbar sind.

12. Auswerfersystem nach Anspruch 11, dadurch gekennzeichnet, daß der gemeinsame Auswerferzylinder in zwei getrennt beaufschlagbare, wirkungsmäßig hintereinandergeschaltete Zylinder (104, 106) unterteilt ist.

**Claims**

1. Ejector system for divisible moulds, in particular foam material compression moulds, comprising a plurality of mechanical ejectors (12 ; 100) which are actuable *via* flexible rods (16) guided in tubes (20) by a common ejector cylinder (24) disposed outside the mould, characterized in that the rods (16) consisting of a tough elastic plastic are made smooth walled and sealed at their exit from the mould.

2. Ejector system according to claim 1, characterized in that the tubes (20), preferably consisting of a tough elastic plastic, are also flexible.

3. Ejector system according to claim 1 or 2, characterized in that the tubes (20) enclose the rods (16) with clearance.

4. Ejector system according to any one of the preceding claims, characterized in that the rods (16) are led outwardly through a heating and/or cooling chamber (8) of the mould.

5. Ejector system according to claim 4, characterized in that the tubes (20) extend only up to the outer wall (6) of the heating and/or cooling chamber (8).

6. Ejector system according to claim 5, characterized in that the rods (16) are guided and sealed only at their passage through the outer wall (6) of the heating and/or cooling chamber (8).

7. Ejector system according to any one of the preceding claims, characterized in that the length of the rods (16) is individually adjustable with respect to the length of the tubes (20) together with adjoining guide means (18, 32).

8. Ejector system according to any one of the preceding claims, characterized in that the piston (30) of the ejector cylinder (24 ; 104, 106) is fixedly connected to the ejectors (12) and the ejector cylinder is double action.

9. Ejector system according to any one of the preceding claims, characterized in that the ejectors (12) are chamfered at the rear and comprise plate-shaped heads (14) fittingly accommodated in a corresponding recess (42).

10. Ejector system according to any one of claims 1 to 8, characterized in that at least individual ejectors (100) are integrated in filling injectors (102) of the respective mould.

11. Ejector system according to claim 10, characterized in that the respective ejectors (100) form at the same time the closure member of the respective filling injectors (102) and for this purpose can be brought into three defined positions.

12. Ejector system according to claim 11, characterized in that the common ejector cylinder is divided into two separately influenceable cylinders (104, 106) connected effectively in series.

**Revendications**

1. Système éjecteur pour moules séparables, en particulier des moules pour produits alvéolaires, muni d'une pluralité d'éjecteurs mécaniques (12 ; 100) actionnés par des tiges flexibles (16) guidés dans des tuyaux (20) au moyen d'un cylindre éjecteur (24) commun disposé en dehors du moule, caractérisé en ce que les tiges (16), en matière synthétique visco-élastique ont des parois lisses et sont rendues étanches à leur sortie du moule.

2. Système éjecteur selon la revendication 1, caractérisé en ce que les tuyaux (20), constitués de préférence en une matière synthétique visco-élastique sont également flexibles.

3. Système éjecteur selon la revendication 1 ou 2, caractérisé en ce que les tuyaux (20) entourent les tiges (16) avec un certain jeu.

4. Système éjecteur selon l'une des revendications précédentes, caractérisé en ce que les tiges sont guidées vers l'extérieur à travers une chambre de chauffage et/ou de refroidissement (8) du moule.

5. Système éjecteur selon la revendication 4, caractérisé en ce que les tuyaux (20) s'arrêtent à la paroi extérieure (6) de la chambre de chauffage et/ou de refroidissement.

6. Système éjecteur selon la revendication 5, caractérisé en ce que les tiges (16) sont uniquement guidées et rendues étanches à leur passage à travers la paroi extérieure (6) de la chambre de chauffage et/ou de refroidissement.

7. Système éjecteur selon l'une des revendications précédentes, caractérisé en ce que la longueur des tiges (16) est réglable individuellement par rapport à la longueur des tuyaux (20) et des moyens de guidage (18, 32) consécutifs.

8. Système éjecteur selon l'une des revendications précédentes, caractérisé en ce que le piston (30) du cylindre éjecteur (24 ; 104, 106) est relié de manière fixe aux éjecteurs (12) et en ce que le cylindre éjecteur est à double effet.

9. Système éjecteur selon l'une des revendications précédentes, caractérisé en ce que les éjecteurs (12) possèdent des têtes (14) ayant la forme d'une assiette, biseautées à l'arrière et pouvant s'insérer dans un évidement correspondant (42).

10. Système éjecteur selon l'une des revendications 1 à 8, caractérisé en ce qu'au moins quelques-uns des éjecteurs (100) sont intégrés dans des injecteurs de remplissage (102) du moule correspondant.

11. Système éjecteur selon la revendication 10, caractérisé en ce que les éjecteurs (100) constituent en même temps l'organe obturateur des injecteurs de remplissage (102) correspondants et peuvent être amenés à cet effet dans trois positions définies.

12. Système éjecteur selon la revendication 11, caractérisé en ce que le cylindre éjecteur commun est partagé en deux cylindres (104, 106) pouvant être commandés séparément et montés en série.

# Fig. 1

*Fig. 2*

*Fig. 3*

# Fig. 4

Fig. 5

*Fig. 6*